(19) Europäisches Patentamt
European Patent Office
Office européen des brevets

(11) Publication number: 0 331 087 A2

# (12) EUROPEAN PATENT APPLICATION

(21) Application number: 89103427.4

(22) Date of filing: 27.02.89

(51) Int. Cl.[4]: C09D 3/80 , C08F 2/46 , C08J 7/04

(30) Priority: 29.02.88 JP 46377/88

(43) Date of publication of application: 06.09.89 Bulletin 89/36

(84) Designated Contracting States: DE FR GB NL

(71) Applicant: MITSUBISHI RAYON CO. LTD.
3-19, Kyobashi 2-chome Chuo-Ku
Tokyo 104(JP)

(72) Inventor: Tayama, Suehiro
8-11, Misonodai
Ohtake-shi Hiroshima-ken(JP)
Inventor: Ishii, Taro
2-1, Kurokawa 3-chome
Ohtake-shi Hiroshima-ken(JP)

(74) Representative: Patentanwälte TER MEER - MÜLLER - STEINMEISTER
Mauerkircherstrasse 45
D-8000 München 80(DE)

## (54) Ultraviolet-curing coating composition and production process of molded plastic article having hardened coating of modified surface characteristics.

(57) An ultraviolet-curing coating composition is formed of (A) 100 parts by weight of a photopolymerizable composition composed of (a-1) 50-100 wt.% of a crosslinking-polymerizable compound containing at least two acryloyloxy or methacryloyloxy groups per molecule and (a-2) 0-50 wt.% of another compound copolymerizable with the crosslinking-polymerizable compound (a-1); (B) 0.02-10 parts by weight of a photoinitiator comprising a photoinitiator compound (b-1), the peak of sensitive wavelengths of said photoinitiator compound (b-1) being between 365-400 nm; and (C) 0.1-15 parts by weight of an ultraviolet absorber. A molded plastic article having a hardened coating of modified surface characteristics can be produced by i) sandwiching the above composition between the article and a synthetic resin film, ii) bringing the composition into close contact with the article, iii) exposing the composition to ultraviolet rays to cure the composition, thereby forming the coating on the article, and then iv) peeling off the film from the coating.

EP 0 331 087 A2

# ULTRAVIOLET-CURING COATING COMPOSITION AND PRODUCTION PROCESS OF MOLDED PLASTIC ARTICLE HAVING HARDENED COATING OF MODIFIED SURFACE CHARACTERISTICS

## BACKGROUND OF THE INVENTION

1) Field of the Invention:

This invention relates to an ultraviolet-curing coating composition capable of providing a hardened coating of excellent abrasion resistance and weatherability as well as to a process for the production of a molded or formed plastic article with a hardened coating obtained by curing the coating composition on the molded or formed (hereinafter referred to collectively as "molded") plastic article and modified in surface characteristics such as abrasion resistance, weatherability and surface smoothness.

2) Description of the Prior Art:

Molded articles of plastics such as polymethyl methacrylate resin, polycarbonate resins and polyallyl diglycol carbonate resins have various advantages. For example, they are not only lighter in weight and far superior in impact resistance compared to glass articles but also economical and easy to mold, form and/or process. These advantages lead to them being used in a wide variety of fields.

Due to insufficient surface hardness, such molded plastic articles are however susceptible to surface damage through contact to and/or impact and/or abrasion by other objects in the course of their shipping, upon attachment of parts thereto or during use, so that their yield may be lowered or their appearance may be impaired. Where molded articles are intended particularly for use as optical lenses such as camera lenses and magnifier lenses, spectacle lenses such as lenses for fashion glasses, sunglasses and corrective or prescription lenses, window panes, and other applications, such surface damage reduces their commercial value considerably or renders them unusable in a short period of time. Accordingly, there has been a strong demand for the improvement of the surface hardness of these molded plastic articles.

In addition, plastics are generally prone to modification under light. They are hence accompanied by the drawback that they undergo tinging or discoloration such as yellowing or fogging; in other words, their weatherability is poor when they are exposed for a long period of time to light, for example, when they are used outdoor or under a fluorescent lamp over time. Ultraviolet rays are responsible such tinging or discoloration.

To modify the surface characteristics, such as abrasion resistance and weatherability, of a molded plastic article, it has been the practice to form on the surface of the article a coating of an ultraviolet-curing resin.

As popular processes, there are, for example, the processes described in Japanese Patent Application Laid-Open Nos. 102936/1978, 104638/1978 and 97633/1979 where a molded plastic article is coated with a compound containing plural (meth)acryloyloxy groups per molecule, followed by curing of the compound in air to impart excellent abrasion resistance to the article. In these production processes, it is also routine, for example, to incorporate an ultraviolet absorber in a radiation-curing coating composition to impart weatherability (Japanese Patent Laid-Open Nos. 86847/1981, 12284/1981, 127635/1981 and 141309/1981) or to mix a surfactant with the coating composition with a view toward improving the surface smoothness (Japanese Patent Laid-Open Nos. 98265/1980 and 861/1981).

Such incorporation of an ultraviolet absorber in a cured coating is indispensable for protecting the base resin from harmful ultraviolet rays and thus improving weatherability. Ultraviolet curing is however accompanied inter alia by the following problems.

(a) It is desirable to mix an ultraviolet absorber in a large amount for imparting improved weatherability. However, the ultraviolet absorption wavelengths of conventional ultraviolet absorbers are substantially the same as those of routine photoinitiators. If an ultraviolet absorber should be mixed in a large amount, the absorber also absorbs those ultraviolet rays required for curing, resulting in insufficient curing. This insufficient curing may in turn lead to the formation of wrinkles and/or insufficient adhesion after curing. In the worst case, curing may not be feasible at all.

(b) Since curing is conducted in air, the above process tends to develop surface defects such as a granular structure caused by dust and dirt floating in the air and flow marks developed in the coating step.

(c) Curing in air requires the use of an ultraviolet-curing coating composition which is curable in air. Accordingly, an unavoidable limitation is imposed on the crosslinking-polymerizable compound which is included in the ultraviolet-curing coating composition. Further, polymerization is affected by oxygen upon ultraviolet curing, whereby a peroxide forms in the coating, impairing weatherability.

There is another method for providing a similar surface-protective coating on a synthetic plastic panel or a molded synthetic plastic article. As described in Japanese Patent Publication Nos. 22951/1974, 36829/1974, 36830/1974, 14617/1979 and 53488/1981, a molded synthetic plastic article with excellent abrasion resistant qualities is produced by coating the molding surface of a mold with a coating composition of a compound containing plural (meth)acryloyloxy groups per molecule, curing the coating composition to form a abrasion-resistant coating, pouring into the mold a polymerizable composition as a starting material for the base material of the synthetic resin, and then polymerizing the polymerizable composition to transfer the hardened abrasion-resistant coating to the base resin. It has also been proposed, for example, in Japanese Patent Laid-Open No. 30730/1972 and Japanese Patent Publication No. 39662/1976 to form a coating, which has high surface gloss or bears a surface pattern, on the surface of a resin as a base material by forming a coating layer on the surface of the base material, bringing a hollow roller having a smooth surface or bearing a pattern or a film-like material into close contact with the coating layer, and then exposing the coating layer to light such as ultraviolet rays or to radiation to cure the coating layer.

These production processes are extremely good in stability of quality, productivity and other factors. In addition, they seldom develop surface defects such as those described above under (b) because a surface, which will become the surface of the final product, is fixed by the surface of a mold or film-like material during the formation of the coating. In these processes, air is effectively blocked out by the mold or film-like material for the coating composition during curing and polymerization of the coating composition is not affected by oxygen in the air. These production processes therefore have an advantage in that they are free from limitations such as that referred to above under (c).

These production processes are however accompanied by the problem that the yield is lowered to a considerable extent when the mold is deformed or otherwise damaged. In these production processes, serious problems such as problem (a) described above still remain unsolved.

As long as such a conventional process is used, limitations are therefore inevitably imposed on the amount of the ultraviolet absorber, which is to be added to an ultraviolet-curing coating composition, in order to apply sufficient hardness and adhesion to the hardened coating to be formed. Accordingly, limita tions are of course imposed on the weatherability of the hardened coating.

## SUMMARY OF THE INVENTION

An object of this invention is to provide an ultraviolet-curing coating composition which can provide a coating free of insufficient hardness and poor adhesion caused by insufficient curing in spite of the inclusion of an ultraviolet absorber in a relatively large amount.

Another object of this invention is to provide a process for the production of a molded plastic article with a hardened coating having excellent weatherability and abrasion resistance and containing fewer surface appearance defects.

In one aspect of this invention, there is thus provided an ultraviolet-curing coating composition which comprises as principal components:

(A) 100 parts by weight of a photopolymerizable composition composed of (a-1) 50-100 wt.% of a crosslinking-polymerizable compound containing at least two acryloyloxy or methacryloyloxy groups per molecule and (a-2) 0-50 wt.% of another compound copolymerizable with the crosslinking-polymerizable compound (a-1);

(B) 0.02-10 parts by weight of a photoinitiator comprising a photoinitiator compound (b-1), the peak of sensitive wavelengths of said photoinitiator compound (b-1) being between 365-400 nm, and

(C) 0.1-15 parts by weight of an ultraviolet absorber.

In another aspect of this invention, there is also provided a process for the production of a molded plastic article having a hardened coating of modified surface characteristics. The process comprises sandwiching the above coating composition between the molded plastic article and a synthetic resin film, bringing the coating composition into close contact between the molded plastic article and the film-like material, exposing the coating composition to ultraviolet rays to cure the composition, thereby forming the

coating on the article, and then peeling off the film from the coating.

## DETAILED DESCRIPTION OF THE PREFERRED EMBODIMENTS

The photopolymerizable composition (A) useful in the practice of this invention is composed of (a-1) 50-100 wt.% of the crosslinking-polymerizable compound containing at least two acryloyloxy groups or methacryloyloxy groups (hereinafter abbreviated as "(meth)acryloyloxy groups") per molecule and (a-2) 0-50 wt.% of another compound copolymerizable with the crosslinking-polymerizable compound (a-1). Although no particular limitation is imposed on the photopolymerizable composition as long as it is curable by ultraviolet rays, it is necessary to take into due consideration abrasion weatherability and chemical resistance in its selection.

As illustrative examples of the crosslinking-polymerizable compound (a-1) containing at least two (meth)acryloyloxy groups per molecule, may be mentioned (1) poly(meth)acrylates obtained from a polyhydric alcohol or a derivative thereof and (meth)acrylic acid or a derivative thereof, (2) poly(meth)-acrylates of saturated or unsaturated polyester obtained from a polyhydric alcohol or a derivative thereof, a polycarboxylic acid or a derivative thereof, and (meth)acrylic acid or a derivative thereof, and (3) urethane poly(meth)acrylates obtained from a polyisocyanate and a compound containing at least one active hydrogen atom and at least one (meth)acryloyloxy group.

Exemplary polyhydric alcohols useful in the practice of this invention include dihydric alcohols such as ethylene glycol, diethylene glycol, triethylene glycol, tetraethylene glycol, polyethylene glycols having an average molecular weight of from about 300 to about 1000, propylene glycol, dipropylene glycol, 1,3-propanediol, 1,3-butanediol, 2,3-butanediol, 1,4-butanediol, 1,5-pentanediol, 1,6-hexanediol, neopentyl glycol, 2-ethylhexyl-1,3-hexanediol, 2,2′-thiodiethanol and 1,4-cyclohexanedimethanol; trihydric alcohols such as trimethylolethane, trimethylolpropane, pentaglycerol, glycerol, 1,2,4-butanetriol and 1,2,6-hexanetriol; and tetrahydric and higher polyhydric alcohols such as pentaerythritol, diglycerol and dipentaerythritol.

As the polycarboxylic acid, a dicarboxylic acid is used preferably. Specific examples of the dicarboxylic acid includes aliphatic dicarboxylic acids such as malonic acid, succinic acid, glutaric acid, adipic acid and sebacic acid; alicyclic dicarboxylic acids such as tetrahydrophthalic acid and 3,6-endomethylenetetrahydrophthalic acid; aromatic dicarboxylic acids such as phthalic acid, isophthalic acid and terephthalic acid; thioglycolic acid; thiodivaleric acid; diglycolic acid; and unsaturated dicarboxylic acids such as maleic acid, fumaric acid and itaconic acid. Their chlorides, anhydrides and esters can also be used.

As specific examples of the poly(meth)acrylates (1), may be mentioned diethylene glycol di(meth)-acrylates, triethylene glycol di(meth)acrylates, tetraethylene glycol (meth)acrylates, 1,4-butanediol di(meth)-acrylates and 1,6-hexanediol di(meth)acrylates as those containing two (meth)acryloyloxy groups. Illustrative examples of poly(meth)acrylates containing three or more (meth)acryloyloxy groups include trimethylolpropane tri(meth)acrylates; trimethyloylethane tri(meth)acrylates; pentaglycerol tri(meth)acrylates; pentaerythritol tri(meth)acrylates; pentaerythritol tetra(meth)acrylates; glycerin tri(meth)acrylates; and compounds represented by the following formula (I):

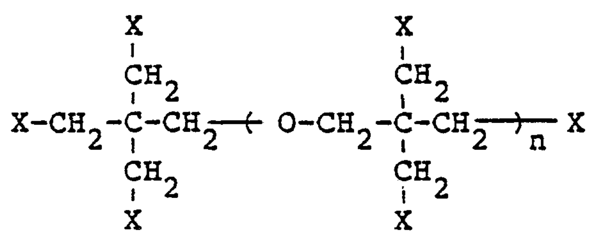

(I)

wherein n is an integer of 1-4, at least three of Xs are independently a

$CH_2=CR^1\text{-}CO\!\left(O\text{-}R^2\text{-}\overset{O}{\overset{\|}{C}}\right)_m O\text{-}$ group, m stands for an integer of 0-2, $R^1$ means a hydrogen atom or methyl group and $R^2$ denotes an alkylene group having 1-6 carbon atoms, and any remaining X is an OH group,

for example, dipentaerythritol tri(meth)acrylates, dipentaerythritol tetra(meth)acrylates, dipentaerythritol penta(meth)acrylates, dipentaerythritol hexa(meth)acrylates, tripentaerythritol tetra(meth) acrylates, tripentaerythritol penta(meth)acrylates, tripentaerythritol hexa(meth)acrylates and tripentaerythritol hepta(meth)-acrylates.

The polyester poly(meth)acrylates (2) mentioned above are compounds each of which is basically obtained by reacting a mixture of a polyhydric alcohol, a polycarboxylic acid and a (meth)acrylic acid at a ratio such that the hydroxyl groups of the polyhydric alcohol eventually become equivalent in amount to the carboxyl groups of both the polycarboxylic acid and (meth)acrylic acid.

As preferable polyester poly(meth)acrylates, may be mentioned those obtained individually by using a dihydric alcohol or a mixture of a dihydric alcohol and a trihydric alcohol as a polyhydric alcohol and a dicarboxylic acid as a polycarboxylic acid. When a mixture of a trihydric alcohol and a dihydric alcohol is used, any molar ratio of the trihydric alcohol to the dihydric alcohol can be chosen. The molar ratio of the dicarboxylic acid to (meth)acrylic acid is preferably determined in such a way that the equivalent ratio of the carboxyl groups of the dicarboxylic acid to the carboxyl groups of the (meth)acrylic acid falls within a range of from 2:1 to 0:1. If the proportion of the dicarboxylic acid is greater than the upper limit of the above range, the viscosity of the resulting polyester poly(meth)acrylate will be so high that difficulties will be encountered upon formation of the coating.

As specific examples of the above-described urethane poly(meth)acrylates (3), may be mentioned (i) those obtained by reacting by a method known per se in the art trimethylolpropanetoluylene diisocyanate or a polyisocyanate represented by the following formula (II):

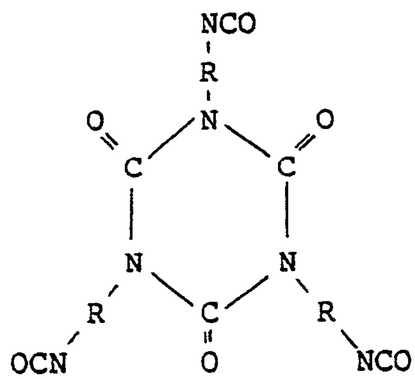

(II)

wherein R is an alkylene group having 1-10 carbon atoms or a phenylene, substituted phenylene or diphenylene group,
with at least 2 moles, per mole of the isocyanate compound, of a compound containing at least one active hydrogen atom and at least one (meth)acryloyloxy group [for example, 2-hydroxyethyl (meth)acrylate, 2-hydroxypropyl (meth)acrylate, 2-hydroxy-3-propyl (meth)acrylate, or N-methylol (meth)acrylamide or the]; for example, the tri(meth)acrylates or di(meth) acrylates of tris(2-hydroxyethyl)isocyanuric acid and the tri-(meth)acrylates or di(meth)acrylates of di(2-hydroxyethyl)mono(2-hydroxyheptane)isocyanuric acid; and (ii) compounds represented by the following formula (IV):

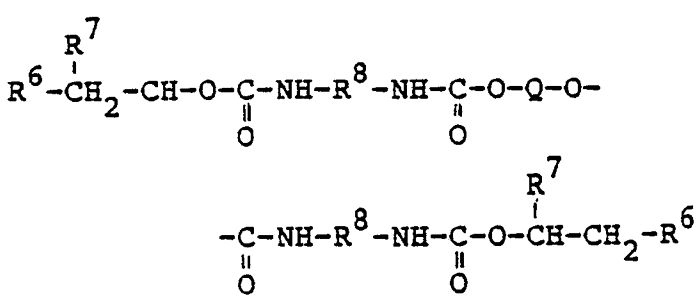

(IV)

wherein $R^6$ means a (meth)acryloyloxy group, $R^7$ denotes a hydrogen atom or methyl group, $R^8$ is a phenylene group, a substituted phenylene group or an alkylene group having 2-6 carbon atoms, and Q is

$$-(C_4H_8O)_p- \text{ or } -[(CH_2)_p-\underset{\underset{O}{\|}}{C}-O-(CH_2)_q-\underset{\underset{O}{\|}}{C}-O]_r-(CH_2)_p-$$

in which p and q are individually an integer of 1-8 and y is an integer of 0-10.

The above-described crosslinking-polymerizable compounds (a-1) may be used singly. It is however preferred to use two or more of the compounds (a-1) in combination. Among the crosslinking-polymerizable compounds (a-1), those containing three or more (meth)acryloyloxy groups are useful as components capable of imparting high abrasion resistance and chemical resistance to a hardened coating. It is thus preferred that a compound containing three or more (meth) acryloyloxy groups make up a portion of the crosslinking-polymerizable compound (a-1). Among the crosslinking-polymerizable compounds (a-1), a compound containing two (meth)acryloyloxy groups is useful as a component capable of imparting sufficient adhesion and flexibility to the hardened coating and preferably, also makes up a portion of the crosslinking-polymerizable compound (a-1). In particular a compound containing two or three (meth)acryloyloxy groups and having a viscosity not higher than 150 cps at 20°C is effective in providing an ultraviolet-curing coating composition and forming a hardened coating of fewer surface defects.

It is most preferable that the crosslinking-polymerizable compound (a-1) be a mixture of 0-75 wt.% of a compound containing at least two (meth)acryloyloxy groups and having a viscosity higher than 150 cps at 20°C and 25-100 wt.% of another compound containing two or three (meth)acryloyloxy groups and having a viscosity not higher than 150 cps at 20°C.

As illustrative examples of the compound (a-2) copolymerizable with the crosslinking-polymerizable compound and useful in the practice of this invention, may be mentioned compounds containing at least one (meth)acryloyloxy group; aromatic vinyl compounds such as styrene and α-methylstyrene; and cyanated vinyl compounds such as acrylonitrile and methacrylonitrile. Particularly preferred are those containing one (meth)acryloyloxy group, for example, methyl (meth)acrylates, ethyl (meth)acrylates, butyl acrylate, isobutyl acrylate, t-butyl acrylate, 2-ethylhexyl acrylate, lauryl acrylate, tridecyl acrylate, cyclohexyl acrylate, 2-hydroxyethyl acrylate, 2-hydroxypropyl acrylate, glycidyl acrylate, tetrahydrofurfuryl acrylate, benzyl acrylate, 1,4-butylene glycol monoacrylate, ethoxyethyl acrylate, ethylcarbitol acrylate, 2-hydroxy-3-chloro-propyl acrylate, acrylamide, N-hydroxyethylacrylamide, N-hydroxymethylacrylamide, N-hydroxypropylacrylamide, N-hydroxybutylacrylamide, hydroxymethyldiacetoneacrylamide and N-hydroxyethyl-N-methylacrylamide; mono(meth)acrylates represented by the following formula:

$$X(OC_2H_4)_n\!-O-R \text{ or } X(OC_2H_4)_n\!-O\overset{\overset{O}{\|}}{C}-R$$

wherein X means a (meth)acryloyloxy group, n stands for 1-10, and R denotes an alkyl, substituted alkyl, phenyl, substituted phenyl, benzyl or substituted benzyl group, for example, methoxydiethylene glycol mono(meth)acrylates, methoxypolyethylene glycol (meth)acrylates, phenoxypolyethylene glycol (meth)-acrylates, butoxyethylene glycol (meth)acrylates, β-(meth)acryloyloxyethyl hydrogenphthalates, β-(meth)-acrylyl oxyethyl hydrogensuccinates, and β-(meth)acryloyloxypropyl hydrogensuccinates; and various known epoxy (meth)acrylates and urethane (meth)acrylates.

The photoinitiator (B) useful in the practice of this invention is required to contain the photoinitiator compound (b-1). The peak of sensitive wavelengths of the photoinitiator compound (b-1) is between 365-400 nm, both wavelengths inclusive. Because of the use of the photoinitiator compound (b-1), good curing is still feasible even when a relatively large amount of an ultraviolet absorber is mixed in the ultraviolet-curing coating composition.

As illustrative examples of the photoinitiator compounds (b-1) having a peak of sensitive wavelengths between 365-400 nm may be mentioned thioxanthone photoinitiators and acylophosphine oxide photoinitiators. Specific examples of thioxanthone photoinitiators include 7-chlorothioxanthone, 2,4-diethylthioxanthone and 2,4-diisopropylthioxanthone. Since use of these thioxanthone photoinitiators may result in a hardened coating tinged in yellow, acylophosphine oxide photoinitiators are preferable. Among acylophosphine oxide photoinitiators, preferred are those represented by the following formula (III):

$$R^3-\overset{\overset{O}{\|}}{C}-\overset{\overset{O}{\|}}{P}\begin{matrix} / R^4 \\ \backslash R^5 \end{matrix} \qquad (III)$$

wherein $R^3$, $R^4$ and $R^5$ mean independently an alkyl or oxyalkyl group having 1-8 carbon atoms or a phenyl, substituted phenyl, benzyl or substituted benzyl group. Of these, more preferred are those represented by the formula (III) in which $R^3$, $R^4$ and $R^5$ mean independently an oxyalkyl group having 1-8 carbon atoms, a phenyl group or a substituted phenyl group. Specific examples of particularly-preferred phosphine oxide photoinitiators include trimethylbenzoyldiphenylphosphine oxide, and benzoyldiethoxyphosphine oxide.

In the present invention, the photoinitiator (B) is used in an amount of 0.02-10 parts by weight per 100 parts by weight of the photopolymerizable composition (A). In the photoinitiator (B), the photoinitiator compound (b 1) is used generally in an amount of 0.01-7 parts by weight. It is not preferable to add the photoinitiator in any excess amount, because the addition of the photoinitiator in such an excess amount may result in tinging, cracks and/or reduced weatherability after curing. Addition of the photoinitiator in an unduly small amount may lead to poor curing, and after curing, may result in a hardened coating having insufficient hardness and poor adhesion. It is hence not preferred to use the photoinitiator in any amount outside the above range.

Incidentally, it is preferable in the present invention to use (b-2) another photoinitiator compound, the peak of whose sensitive wavelengths is between 200-365 nm, the latter being exclusive, in combination with the photoinitiator compound (b-1). The combined use of the two photoinitiator compounds of different kinds makes it possible to obtain a hardened coating of still improved surface hardness.

Illustrative examples of the photoinitiator compound (b-2) include carbonyl compounds such as benzoin, benzoin methyl ether, benzoin ethyl ether, benzoin propyl ether, benzoin isobutyl ether, acetoin, butyroin, toluoin, benzil, benzophenone, p-methoxybenzophenone, 2,2-diethoxyacetophenone, α,α-dimethoxyα-phenylacetophenone, methylphenyl glyoxylate, ethylphenyl glyoxylate, 4,4′-bis-(dimethylaminobenzophenone), and 2-hydroxy-2-methyl-1-phenyl-propan-1-one; sulfur compounds such as tetramethylthiuram monosulfide and tetramethylthiuram disulfide; azo compounds such as azobisisobutyronitrile and azobis-2,4-dimethylvaleronitrile; and peroxide compounds such as benzoyl peroxide and di-tert-butyl peroxide.

It is suitable to add the photoinitiator compound (b-2) in an amount up to 6 parts by weight based on 100 parts by weight of the photopolymerizable composition (A). It is also preferred to mix the photoinitiator compounds (b-1) and (b-2) at a ratio satisfying the following relationship:

(b-1) ≧ (b-2)

A photoinitiator absorbs light energy and initiates a polymerization reaction. It has the property that light energy in a certain narrow wavelength range, which varies depending on its kind, can be absorbed specifically with ease.

The wavelength range is generally called an "absorption band". The wavelength which is absorbed most easily in the absorption band is called the "maximum absorption wavelength". They can be determined by analyzing an absorption spectrum. The absorption spectrum can be obtained by measuring a solution, which has been obtained by dissolving a photoinitiator at a concentration of about 0.1 mg to 100 mg in 100 mℓ of an organic solvent such as ethanol, chloroform or hexane, by a spectrophotometer in a manner known per se in the art.

The absorption band obtained from the absorption spectrum contains one or more peaks. It is the maximum absorption wavelength that shows the maximum absorption in these peaks. The term "the peak of sensitive wavelengths" as used herein means the maximum absorption wavelength in the absorption band.

No particular limitation is imposed on the ultraviolet absorber (C) to be used in this invention. Usable ultraviolet absorbers even include those similar to light stabilizers for polymers such as hindered amine type one. Any ultraviolet absorber can be used as long as it can be dissolved or dissolved evenly in the photopolymerizable composition by any suitable method. However, preferred are compounds derived from benzophenone, benzotriazole, phenyl salicylate and phenyl benzoate and having a maximum absorption wavelength in a range of 240-370 nm from the standpoint of good solubility in the composition of this invention and the weatherability of the composition to be obtained. These ultraviolet absorbers may be used either singly or in combustion. No problem or inconvenience will arise from their combined use with one or more light stabilizers of a kind or kinds other than those mentioned above.

Specific examples of these ultraviolet absorbers include 2-hydroxybenzophenone, 5-chloro-2-hydroxybenzophenone, 2,4-dihydroxybenzophenone, 2-hydroxy-4-methoxybenzophenone, 2-hydroxy-4-n-octoxybenzophenone, 4-dodecyloxy-2-hydroxybenzophenone, 2-hydroxy-4-octadecyloxybenzophenone, 2,2′-dihydroxy-4-methoxybenzophenone, 2,2′-dihydroxy-4,4-dimethoxybenzophenone, phenyl salicylate, p-tert-butylphenyl salicylate, p (1,1,3,3 tetramethylbutyl)phenyl salicylate, 3-hydroxyphenyl benzoate, phenylene-1,3-dibenzoate, 2-(2-hydroxy-5-methylphenyl)benzotriazole, 2-(2-hydroxy-5-tert-butylphenyl)-5-chlorobenzotriazole, 2-(2-hydroxy-3,5-di-tert-butylphenyl)benzotriazole, 2-(2-hydroxy-5-tert-butylphenyl)benzotriazole,

and 2-(2-hydroxy-4-octyloxyphenyl)benzotriazole.

These ultraviolet absorbers should be added in an amount sufficient to protect a molded plastic article from harmful light and hence to impart good weatherability. The amount of ultraviolet absorber to be added depends primarily on the thickness of the coating to be formed. In general, the ultraviolet absorber (C) is added in an amount of 0.1-15 parts by weight per 100 parts by weight of the photopolymerizable composition (A). To impart good weatherability to a hardened coating, it is desirable to satisfy the following formula (V):

$0.07 \leq x \cdot d \leq 0.58$ (V)

wherein d is the thickness of the hardened coating as expressed in terms of μm, and x is the amount, as expressed in terms of mole, of the ultraviolet absorber (C) added per 100 g of the photopolymerizable composition (A).

If $x \cdot d$ is smaller than 0.07, the coating cannot cut off harmful light fully, so that the molded plastic article is susceptible to yellowing and/or fogging thereby making it difficult to obtain good weatherability. On the other hand, $x \cdot d$ greater than 0.58 is not preferred either because such a large $x \cdot d$ tends to give deleterious effects to other physical properties such that cracks are formed in the coating and/or sufficient adhesion and/or abrasion resistance cannot be obtained.

The preferable amount of the ultraviolet absorber (C) to be added may range from 0.001 mole to 0.045 mole per 100 g of the photopolymerizable composition (A). Amounts smaller than 0.001 mole result in an excessively large coating thickness and cause cracks and breakage even when the conditions of the formula (V) are met. In contrast, amounts greater than 0.045 mole lead to an unduly small coating thickness, thereby making it difficult to impart good weatherability.

Although the photopolymerizable composition (A), photoinitiator (B) and ultraviolet absorber (C) are essential components for the coating composition according to this invention, the coating composition of this invention may be added suitably with small amounts of fine particles of an inorganic pigment such as silica, titanium oxide or aluminum oxide; fine organic particles of a crosslinked polymer or copolymer formed by emulsion or suspension polymerization; a stabilizer such as antioxidant or polymerization inhibitor; a leveling agent; a defoaming agent; a thickener; a anti-settling agent; a pigment dispersant; an antistatic agent; an anti-fogging agent; a delustering agent or lustering agent; and other agents as needed.

As a diluent for facilitating the coating work or bringing about the leveling effect upon coating a base material by the spraying, brushing or dipping method or by means of a roll coater, an organic solvent may be used as need. Organic solvents usable for this purpose are preferably those miscible well with the ultraviolet-curing coating composition and having a boiling point of at least 50°C but not higher than 200°C at atmospheric pressure and a viscosity not higher than 10 cps at room temperature. Specifically, it is possible to use alcohols such as methanol, ethanol, isopropanol, n-propanol, isobutanol and n-butanol; aromatic hydrocarbons such as benzene, toluene, xylene and ethylbenzene; ketones such as acetone and methyl ethyl ketone; and dioxane, ethyl acetate, n-butyl acetate, ethyl cellosolve and propionic acid.

The process of this invention, which is suitable for use in the production of a molded plastic article having a hardened coating with modified surface characteristics, can be practiced by interposing the above ultraviolet-curing coating composition between the molded plastic article and a synthetic resin film, bringing the composition into close contact between the molded plastic articles and the film-like material, exposing the composition to ultraviolet rays to cure the composition, thereby forming the coating on the article, and then peeling off the film from the coating.

Although no particular limitation is imposed on the synthetic resin film to be employed in the process of this invention, it is preferable to choose it by taking the properties of the coating composition and the intended quality of the product into due consideration. If a film having a high oxygen permeability, such as a polypropylene film, is used by way of example, the polymerization may be so affected by oxygen in air as to fail to cure the coating composition in some instances. In the process of this invention, the surface of the synthetic resin film defines the surface of the coating. Special care must therefore be taken upon selection of a film when formation of a fine and smooth surface is important. Selection of an appropriate synthetic resin film for example, use of a film having low oxygen permeability and containing less ruggedness on the surface, e.g., a polyester film or triacetate film that allows air oxygen to be isolated substantially upon curing, can thus bring about one or more significant advantages. It is hence possible to cure a coating composition which is adversely effected by oxygen and to avoid the reduction of weatherability of the coating itself due to the formation of a peroxide.

Moreover, the coating composition is held in place by the synthetic resin film during its curing. It is hence possible to substantially prevent defects in appearance caused by dust, dirt and/or poor leveling, such as flow marks, granular surface and waviness.

The thickness of the synthetic resin film may be 5-300 μm, with 10-200 μm being preferred. If it is

smaller than 10 µm, the waviness or slack of the synthetic resin film tends to impair the appearance of the coating to be formed. On the other hand, a thickness greater than 200 µm makes it difficult to control the thickness of the coating to be formed.

As a method for interposing the coating composition between the synthetic resin film and the molded plastic article and then bringing the composition into close contact with the article, any method may be used as long as the coating composition can be brought into close contact with the article by means of press rolls, a squeezing bar, a brush, a squeegee or the like to give a uniform thickness to the resulting coating. It is only necessary to choose a most suitable method by taking into consideration the characteristics of the synthetic resin film and the base material resin, the coating composition to be used, the productivity, and other factors.

Although the thickness of the coating may vary depending on properties required for the product to be obtained, a thickness of 1-100 µm, especially 2-50 µm is preferred for the hardened coating. A thickness smaller than 2 µm is difficult to provide sufficient weatherability and hardness. On the other hand, a thickness greater than 50 µm tends to cause insufficient adhesion and crack formation.

As the radiation source for ultraviolet rays, may be mentioned a fluorescent chemical lamp, metal halide lamp, high-pressure mercury-vapor lamp, ultra-high-pressure mercury-vapor lamp, arc lamp or the like. Peeling of the synthetic resin film may be hampered, if ultraviolet rays are too strong or the exposure time is too long. It is hence necessary to control their intensity to a suitable level before their use.

It is preferable that the ultraviolet rays be irradiated to the ultraviolet-curing coating composition from the synthetic resin film side.

As the base polymer making up the molded plastic article to be processed in accordance with the present invention, a thermoplastic resin is preferred. Illustrative examples of the thermoplastic resin include polymethacrylic resin, polycarbonate resins, polymethacrylimide resin, styrene-based resins, ABS resin, MS resin and vinyl chloride resin. Among these, polymethacrylic resin, polycarbonate resins and polymethacrylimide resin are preferred as base polymers making up molded plastic articles to be processed in accordance with this invention, since they are employed widely by making use of their characteristic properties such as excellent optical properties, high heat resistance and impact resistance, but strongly require improvement in weatherability.

The present invention will hereinafter be described in detail by the following Examples. It should however be borne in mind that this invention is not limited to them. The measurements and evaluations in the examples were conducted by the following methods:

1) Abrasion resistance:

#000 steel wool was mounted on a circular pad having a diameter of 25 mm. The pad was placed on the surface of each sample held in place on a reciprocating abrasion testing machine and the sample was scrapped 100 times reciprocally under a load of 1000 g. After washing the sample, its % haze was measured by a haze meter. Abrasion resistance (α) is expressed by the following formula:

α = (% haze after the abrasion)
- (% haze before the abrasion)

2) Adhesion of coatings:

By a razor blade, eleven parallel grooves were cut at intervals of 1 mm in each sample in the longitudinal and transverse directions, thereby forming a grid pattern of 100 squares. After a commerical adhesive tape was applied firmly over the cross-hatched area, the tape was quickly pulled off. The adhesion was expressed in terms of x/100, in which x means the number of squares still remaining without being pulled off.

3) Appearance:

The appearance of each sample was visually judged depending on defects such as tinging, granular surface, cracks and fogging, and was then ranked as follows:

O: No particularly appreciable defects.

Δ: Yellow tinge of 4.0 or greater in terms of ΔYI value or slight development of cracks or fogging.

X: Extremely poor appearance.

4) Weatherability test:

Using a Q.U.V. accelerated weathering tester manufactured by Q-Panel Company, each sample was exposed to ultraviolet rays for 1000 hr, 1500 hr or 2000 hr in total through cycles consisting of exposure at 63°C under dry conditions for 6 hours and subsequent placing in a dark place under wet conditions at 45°C for 6 hours. The Q.U.V. accelerated weathering test followed the "light and water exposure test for non-metallic materials" prescribed in ASTM G53-84. It is an accelerated deterioration test for plastics, in which a sample is repeatedly subjected to an irradiation step of ultraviolet rays from a fluorescent lamp and a water condensation step. It is used for the evaluation of weatherability.

Example 1:

An ultraviolet-curing coating composition was prepared in accordance with the following formulation:

| | Parts by weight |
|---|---|
| $C_6$-DA (1,6-hexanediol diacrylate) | 60 |
| TAS (condensation product of succinic acid, trimethylolethane and acrylic acid at a molar ratio of 1:2:4) | 40 |
| APO (trimethylbenzoyldiphenylphosphine oxide) | 2.0 |
| Tinuvin-PS (trade name for ultraviolet absorber produced by Ciba-Geigy AG) | 6.0 |

A polycarbonate panel 1 mm thick ("DIALITE", trademark; product of Mitsubishi Rayon Co., Ltd.) was coated with the coating composition. While applying a polyester film ("DIA FOIL", trademark; 50 µm thick) over the thus-applied coating layer, the coating layer was brought into close contact with the panel by means of a sponge roll. The coating layer was squeezed well until its thickness was reduced to about 7 µm. The panel was thereafter caused to pass at a speed of 2.0 m/min under a 120 W/cm metal halide lamp, the irradiation width of which had been adjusted to 13 cm (equipped with a parallel reflector; ozoneless type; distance from the object: 30 cm) in such a way that ultraviolet rays were irradiated through the polyester film. Only the polyester film was then peeled off, followed by further feeding of the panel at a speed of 2 m/min under a 120 W/cm high-pressure mercury-vapor lamp (equipped with a parallel reflector; ozone type; irradiation width: 13 cm; distance between the object and the lamp: 30 cm) to obtain a surface-protected resin panel.

The abrasion resistance, adhesion of coating and appearance of the thus-obtained resin panel, as well as its adhesion and appearance after its Q.U.V. accelerated weathering test, were evaluated. The results are summarized in Table 1.

Examples 2-6:

Using the ultraviolet-curing coating compositions given in Table 1, hardened surface-protective coatings were formed on polycarbonate panels of 1 mm thick in exactly the same manner as in Example 1. The performance of the coatings was thereafter evaluated. The results are shown in Table 1.

Comparative Examples 1-6:

Using the various coating compositions given in Table 2, hardened surface-protective coatings were formed on polycarbonate panels 1 mm thick in exactly the same manner as in Example 1. The performance of the coatings was thereafter evaluated. The results are shown in Table 2.

Comparing Comparative Example 1 to Example 1, the addition of 3 parts by weight of the ultraviolet

absorber in Comparative Example 1 failed to provide sufficient initial performance, while satisfactory initial performance was exhibited in Example 1 in spite of the addition of the ultraviolet absorber in an amount twice that added in Comparative Example 1. It can hence be understood that the coating composition of Example 1 is also superior in weatherability to that of Comparative Example 1.

In Comparitive Example 2, good initial performance was provided by reducing the amount of the ultraviolet absorber to 2 parts by weight. However, no satisfactory results were obtained in weatherability.

Table 1

| Ex. | Coating composition | | | Initial performance | | | | Weatherability (Q.U.V.) | | | |
|---|---|---|---|---|---|---|---|---|---|---|---|
| | Crosslinking-polymerizable compound | Photoinitiator (B) (maximum absorption) | Ultraviolet absorber (C) | Thickness of coating (μm) | Abrasion resistance | Adhesion | Appearance | 1,000 hr | | 1,500 hr | |
| | | | | | | | | Adhesion | Appearance | Adhesion | Appearance |
| 1 | $C_6$-DA 60 pts<br>TAS 40 pts | APO 2 pts (383 nm) | Tinuvin-PS 6 pts | 7 | 1.2 | 100/100 | ○ | 100/100 | ○ | 100/100 | ○ |
| 2 | ditto | APO 3 pts (383 nm) | ditto | 7 | 1.1 | 100/100 | ○ | 100/100 | ○ | 100/100 | ○ |
| 3 | ditto | APO 4 pts (383 nm) | ditto | 7 | 1.0 | 100/100 | ○ | 100/100 | ○ | 100/100 | ○ |
| 4 | $C_6$-DA 60 pts<br>DPHA[1] 40 pts | APO 3 pts (383 nm) | Tinuvin-PS 4 pts | 14 | 0.5 | 100/100 | ○ | 100/100 | ○ | 100/100 | △ |
| 5 | $C_6$-DA 60 pts<br>DPHA 40 pts | APO 3 pts (383 nm) | Tinuvin-PS 6 pts | 14 | 0.6 | 100/100 | ○ | 100/100 | ○ | 100/100 | △ |
| 6 | $C_4$-DA[2] 48 pts<br>TMP-TA[3] 20 pts<br>DPHA 32 pts | APO 3 pts (383 nm) | Tinuvin-PS 6 pts | 10 | 0.7 | 100/100 | ○ | 100/100 | ○ | 100/100 | △ |

1) DPHA: Dipentaerythritol hexaacrylate (viscosity at 20°C: 5000-7000 cP).
2) $C_4$-DA: 1,4-Butanediol diacrylate (viscosity at 20°C: 6 cP).
3) TMP-TA: Trimethylolpropane triacrylate (viscosity at 20°C: 70-100 cP).

Table 2

| Ex. | Coating composition | | | Initial performance | | | | Weatherability (Q.U.V.) | | | |
|---|---|---|---|---|---|---|---|---|---|---|---|
| | | | | | | | | 1,000 hr | | 1,500 hr | |
| | Crosslinking-polymerizable compound | Photoinitiator (maximum absorption) | Ultraviolet absorber | Thickness of coating (μm) | Abrasion resistance | Adhesion | Appearance | Adhesion | Appearance | Adhesion | Appearance |
| 1 | $C_6$-DA 60 pts<br>TAS 40 pts | BEE[1] 3 pts (360 nm) | Tinuvin-PS 3 pts | 7 | 1.4 | 0/100 | ○ | - | - | - | - |
| 2 | ditto | ditto | Tinuvin-PS 2 pts | 7 | 0.8 | 100/100 | ○ | 0/100 | X Severe peeling & yellowing | - | - |
| 3 | ditto | BEE 5 pts (360 nm) | ditto | 7 | 1.2 | 100/100 | ○ | 0/100 | △ Yellowing | - | - |
| 4 | ditto | Irugacure-184[2] (320 nm) 2 pts | Tinuvin-PS 1 pt | 7 | 1.6 | 100/100 | ○ | 0/100 | X Severe peeling & yellowing | - | - |
| 5 | ditto | Irugacure-184 (320 nm) 2 pts | Tinuvin-PS 2 pts | 7 | 1.6 | 0/100 | ○ | - | - | - | - |
| 6 | ditto | MPG[3] 3 pts (254 nm) | Tinuvin-PS 3 pts | 7 | 2.0 | 0/100 | ○ | - | - | - | - |

1) BEE: Benzoyl ethyl ether.
2) Irugacure-184: trade name for an acetophenone derivative produced by Ciba-Geigy AG.
3) MPG: Methylphenyl glyoxylate.

Examples 7-15:

Except for Example 11, polycarbonate panels ("DIALITE", trademark; product of Mitsubishi Rayon Co., Ltd.) were coated by a bar coater with the ultraviolet-curing coating compositions given in Table 3. Polyester films ("DIA FOIL", trademark; 50 µm thick) were then applied separately over the thus-applied coating layers. The coating layers were thoroughly squeezed down by a roller to have a uniform thickness. They were thereafter exposed for about 5 seconds to ultraviolet rays from a metal halide lamp (120 W/cm; ozoneless type; 9 KW; irradiation distance: 15 cm), so that the coatings were cured, in such a way that ultraviolet rays were irradiated through the polymer film.

Finally, the polyester films were peeled off to obtain coated polycarbonate panels.

In Example 11, a polymethyl methacrylate panel ("ACRYLITE", trademark; product of Mitsubishi Rayon Co., Ltd.; 2 mm thick) was dipped in the ultraviolet-curing coating composition shown in Table 3 and then pulled out of the coating composition at a rate of 0.2 cm/sec. After leaving the thus-coated panel for 3 minutes at room temperature, it was exposed for 20 seconds to ultraviolet rays from a 80 W/cm high-pressure mercury-vapor lamp (ozone-type; equipped with a parallel reflector; distance from the object: 20 cm) to obtain a coated polymethyl methacrylate panel.

With respect to the polycarbonate panels and polymethyl methacrylate panel thus obtained, the adhesion and abrasion resistance of their coatings were evaluated. The results are also shown in Table 3. The load was changed from 1,000 g to 3,000 g upon conducting the abrasion resistance test.

Table 3

| | | Example | 7 | 8 | 9 | 10 | 11 | 12 | 13 | 14 | 15 |
|---|---|---|---|---|---|---|---|---|---|---|---|
| (A) | Photopolymerizable composition | DPHA | 40 | 40 | 40 | 40 | 20 | 40 | 40 | 40 | 40 |
| | | TAS | | | | | 40 | | | | |
| | | $C_6$-DA | 60 | 60 | 60 | 60 | 40 | 60 | 60 | 60 | 60 |
| (B) | Photoinitiator (b-1) | APO | 1.2 | 1.2 | 1.2 | 1.2 | 1.6 | 1.2 | 1.2 | 1.2 | 1.2 |
| | Photoinitiator (b-2) | BNP[1)] | 0.9 | 0.9 | 0.9 | 0.9 | 2.4 | 0 | 0 | 0 | 0 |
| (C) | Ultraviolet absorber | Tinuvin-PS | 0.2 | 1 | 3 | 6 | - | - | 1 | 3 | 6 |
| | | Sanol LS-770[2)] | - | - | - | - | 3.0 | - | - | - | - |
| | Solvent | Isopropyl alcohol | - | - | - | - | 160 | - | - | - | - |
| | | Toluene | - | - | - | - | 26.5 | - | - | - | - |
| | Base material | | PC[3)] | PC | PC | PC | PMMA[4)] | PC | PC | PC | PC |
| Evaluation | | Adhesion | 100/100 | 100/100 | 100/100 | 100/100 | 100/100 | 100/100 | 100/100 | 100/100 | 100/100 |
| | | Abrasion resistance | 1.9 | 1.9 | 2.0 | 5.9 | 1.5 | 2.6 | 2.8 | 3.4 | 9.0 |

1) BNP: Benzophenone.
2) Sanol LS-770: Trade name for a light stabilizer produced by Sankyo Co., Ltd.
3) PC: Polycarbonate.
4) PMMA: Polymethyl methacrylate.

Examples 16-22:

Separately using the ultraviolet-curing coating compositions shown in Table 4, polycarbonate panels having a hardened coating were prepared in exactly the same manner as in Example 7 except that the thickness of the hardened coating was changed in various ways.

The evaluation results of the adhesion and weatherability of the polycarbonate panels thus obtained are shown in Table 5.

Table 4

| Formulations of Ultraviolet-Curing Coating Compositions | | | | | | | | | |
|---|---|---|---|---|---|---|---|---|---|
| Example | | | 16 | 17 | 18 | 19 | 20 | 21 | 22 |
| (A) | Photopolymerizable composition | DPHA | 40 | 40 | 40 | 40 | 40 | 40 | |
| | | TAS | | | | | | | 40 |
| | | $C_6$-DA | 60 | 60 | 60 | 60 | 60 | 60 | |
| | | $C_4$-DA | | | | | | | 60 |
| (B) | Photoinitiator | BNP | 1.4 | 1.4 | 1.4 | 1.4 | 1.4 | 1.4 | 1.4 |
| | | APO | 2.1 | 2.1 | 2.1 | 2.1 | 2.1 | 2.1 | 2.1 |
| (C) | Ultraviolet absorber | Tinuvin-PS | 4.0 | 6.0 | 3.0 | 6.0 | 6.0 | 10.0 | 4.0 |
| | Stabilizer | Sanol LS-770 | 1.0 | 1.0 | 1.0 | 1.0 | 1.0 | 1.0 | 1.0 |
| Base material | | | PC[1)] | PC | PC | PC | PC | PC | PC |

1) PC: Polycarbonate.

Table 5

Evaluation Results

| Example | | 16 | 17 | 18 | 19 | 20 | 21 | 22 |
|---|---|---|---|---|---|---|---|---|
| x·d | | 0.75 | 0.11 | 0.22 | 0.45 | 0.56 | 0.45 | 0.12 |
| Coating thickness, μm | | 5 | 5 | 18 | 20 | 25 | 12 | 8 |
| Initial performance | Adhesion | 100/100 | 100/100 | 100/100 | 100/100 | 100/100 | 100/100 | 100/100 |
| After exposure to Q.U.V. for 1,000 hr | Adhesion | 99/100 | 100/100 | 100/100 | 100/100 | 100/100 | 100/100 | 100/100 |
| | Appearance | ○ | ○ | ○ | ○ | ○ | ○ | ○ |
| After exposure to Q.U.V. for 2,000 hr | Adhesion | 0/100 | 100/100 | 100/100 | 100/100 | 100/100 | 100/100 | 100/100 |
| | Appearance | x | ○ | ○ | ○ | ○ | ○ | ○ |

**Claims**

1. An ultraviolet-curing coating composition comprising as principal components:

(A) 100 parts by weight of a photopolymerizable composition composed of (a-1) 50-100 wt.% of a crosslinking-polymerizable compound containing at least two acryloyloxy or methacryloyloxy groups per molecule and (a-2) 0-50 wt.% of another compound copolymerizable with the crosslinking-polymerizable compound (a-1);

(B) 0.02-10 parts by weight of a photoinitiator comprising a photoinitiator compound (b-1), the peak of sensitive wavelengths of said photoinitiator compound (b-1) being between 365-400 nm; and

(C) 0.1-15 parts by weight of an ultraviolet absorber.

2. The coating composition as claimed in Claim 1, wherein the crosslinking-polymerizable compound (a-1) comprises a compound represented by the following formula (I):

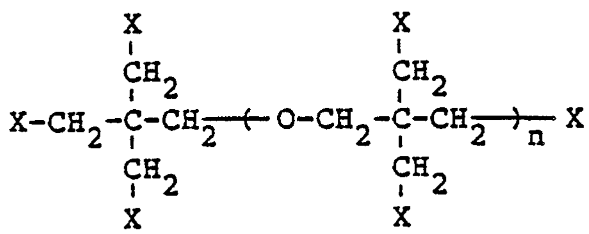

(I)

wherein n is an integer of 1-4, at least three of Xs are independently a $CH_2=CR^1-CO\left(O-R^2-\overset{O}{\overset{\|}{C}}\right)_m$ O- group, m stands for an integer of 0-2, $R^1$ means a hydrogen atom or methyl group and $R^2$ denotes an alkylene group having 1-6 carbon atoms, and any remaining X is an OH group.

3. The coating composition as claimed in Claim 1, wherein the crosslinking-polymerizable comprises a polyacrylate and/or polymethacrylate of a saturated or unsaturated polyester obtained by reacting a polyhydric alcohol, a polycarboxylic acid, and acrylic acid and/or methacrylic acid.

4. The coating composition as claimed in Claim 1, wherein the crosslinking-polymerizable compound comprises a urethane polyacrylate or urethane polymethacrylate obtained by reacting a polyisocyanate represented by the following formula (II):

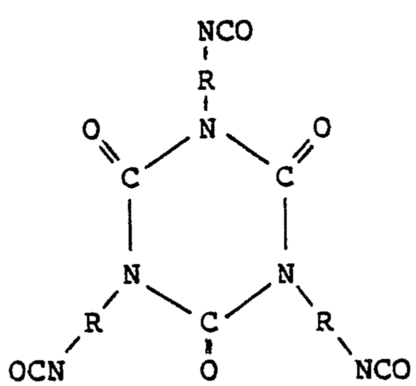

(II)

wherein R is an alkylene group having 1-10 carbon atoms or a phenylene, substituted phenylene or diphenylene group, with a compound containing at least one acryloyloxy or methacryloyloxy group and at least one active hydrogen atom.

5. The coating composition as claimed in claim 1, wherein the crosslinking-polymerizable compound comprises a urethane polyacrylate or polymethacrylate represented by the following formula (IV):

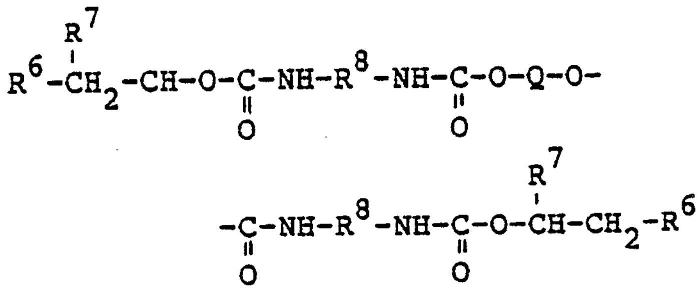 (IV)

wherein $R^6$ means a (meth)acryloyloxy group, $R^7$ denotes a hydrogen atom or methyl group, $R^8$ is a phenylene group, a substituted phenylene group or an alkylene group having 2-6 carbon atoms, and Q is

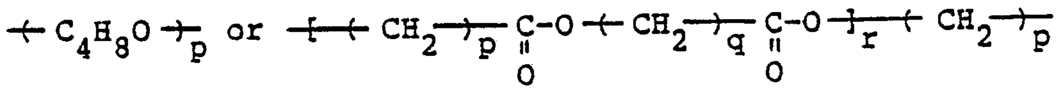

in which p and q are individually an integer of 1-8 and y is an integer of 0-10.

6. The coating composition as claimed in Claim 1, wherein the crosslinking-polymerizable compound (a-1) is a mixture of 0-75 wt.% of a compound containing at least two acryloyloxy or methacryloyloxy groups and having a viscosity higher than 150 cps at 20 °C and 25-100 wt.% of another compound containing two or three acryloyloxy or methacryloyloxy groups and having a viscosity not higher than 150 cps at 20 °C.

7. The coating composition as claimed in Claim 1, wherein the photoinitiator compound (b-1) is represented by the following formula (III):

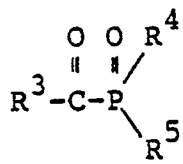 (III)

wherein $R^3$, $R^4$ and $R^5$ mean independently an alkyl or oxyalkyl group having 1-8 carbon atoms or a phenyl, substituted phenyl, benzyl or substituted benzyl group.

8. The coating composition as claimed in Claim 6, wherein in the photoinitiator compound of the formula (IV), $R^3$, $R^4$ and $R^5$ are independently a hydroxyalkyl group having 1-8 carbon atoms or a phenyl or substituted phenyl group.

9. The coating composition as claimed in Claim 7, wherein the photoinitiator compound (b-1) is trimethylbenzoyldipheylphosphine oxide or benzoyldiethoxyphosphine oxide.

10. The coating composition as claimed in Claim 1, wherein the photoinitiator (B) is a mixture of (b-1) the photoinitiator compound and (b-2) another photoinitiator compound, and the peak of sensitive wavelengths of said other photoinitiator compound (b-2) is between 200-365 nm, the latter wavelength being exclusive.

11. The coating composition as claimed in Claim 9, wherein the photoinitiator compounds (b-1) and (b-2) are mixed at a ratio satisfying the following relationship:

(b-1) ≧ (b-2)

12. A molded plastic article having a hardened coating on the surface thereof, said coating is formed by coating the ultraviolet-curing composition according to claim 1 and then irradiating ultraviolet rays.

13. A process for the production of a molded plastic article having a hardened coating of modified surface characteristics, which comprises:

i) sandwiching between a molded plastic article and a synthetic resin film an ultraviolet curing coating composition comprising as principal components:

(A) 100 parts by weight of a photopolymerizable composition composed of (a-1) 50-100 wt.% of a cross linking-polymerizable compound containing at least two acryloyloxy or methacryloyloxy groups per molecule and (a-2) 0-50 wt.% of another compound copolymerizable with the crosslinking-polymerizable compound (a-1);

(B) 0.02-10 parts by weight of a photoinitiator comprising a photoinitiator compound (b-1), the peak of sensitive wavelengths of said photoinitiator compound (b-1) being between 365-400 nm; and

(C) 0.1-15 parts by weight of an ultraviolet absorber;

ii) bringing the coating composition into close contact with the molded plastic article;

iii) exposing the coating composition to ultraviolet rays to cure the coating composition, thereby forming the hardened coating on the molded plastic article; and then

iv) peeling off the synthetic resin film from the hardened coating.

14. The process as claimed in Claim 11, wherein the hardened coating is formed to satisfy the following formula (V):

$0.07 \leq x \cdot d \leq 0.58$ (V)

wherein d is the thickness of the hardened coating as expressed in terms of $\mu$m, and x is the amount, as expressed in terms of mole, of the ultraviolet absorber (C) added per 100 g of the photopolymerizable composition (A).

15. The process as claimed in Claim 11, wherein the base polymer forming the molded plastic article is a polymethyl methacrylate resin, polycarbonate resin or polymethacrylimide resin.

16. The process as claimed in Claim 13, wherein the crosslinking-polymerizable compound (a-1) comprises a compound represented by the following formula (I):

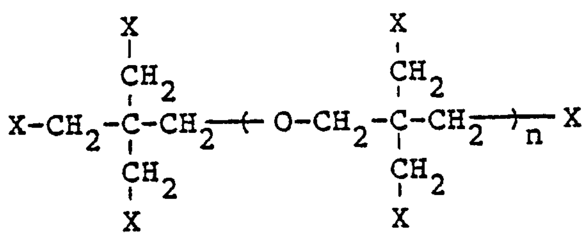

(I)

wherein n is an integer of 1-4, at least three of Xs are independently a

$CH_2=CR^1-CO\left(O-R^2-\overset{O}{\overset{\|}{C}}\right)_m O-$ group, m stands for an integer of 0-2, $R^1$ means a hydrogen atom or methyl group and $R^2$ denotes an alkylene group having 1-6 carbon atoms, and any remaining X is an OH group.

17. The process as claimed in Claim 13, wherein the crosslinking-polymerizable compound comprises a polyacrylate and/or polymethacrylate of a saturated or unsaturated polyester obtained by reacting a polyhydric alcohol, a polycarboxylic acid, and acrylic acid and/or methacrylic acid.

18. The process as claimed in Claim 13, wherein the crosslinking-polymerizable compound comprises a urethane polyacrylate or urethane polymethacrylate obtained by reacting a polyisocyanate represented by the following formula (II):

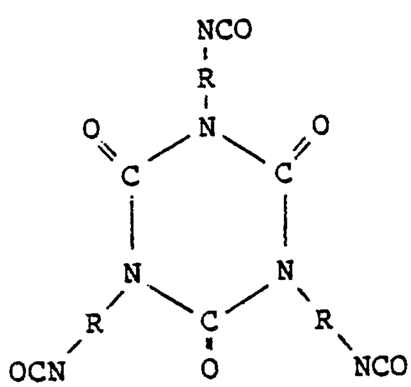

(II)

wherein R is an alkylene group having 1-10 carbon atoms or a phenylene, substituted phenylene or diphenylene group, with a compound containing at least one acryloyloxy or methacryloyloxy group and at least one active hydrogen atom.

19. The process as claimed in claim 13, wherein the crosslinking-polymerizable compound comprises a urethane polyacrylate or polymethacrylate represented by the following formula (IV):

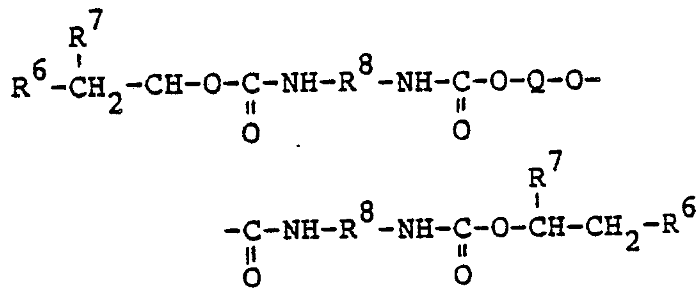

(IV)

wherein $R^6$ means a (meth)acryloyloxy group, $R^7$ denotes a hydrogen atom or methyl group, $R^8$ is a phenylene group, a substituted phenylene group or an alkylene group having 2-6 carbon atoms, and Q is

$-(C_4H_8O)_p-$ or 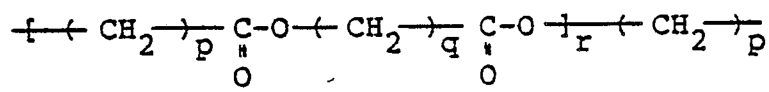

in which p and q are individually an integer of 1-8 and y is an integer of 0-10.

20. The coating composition as claimed in Claim 13, wherein the crosslinking-polymerizable compound (a-1) is a mixture of 0-75 wt.% of a compound containing at least two acryloyloxy or methacryloyloxy groups and having a viscosity higher than 150 cps at 20°C and 25-100 wt.% of another compound containing two or three acryloyloxy or methacryloyloxy groups and having a viscosity not higher than 150 cps at 20°C.

21. The process as claimed in Claim 13, wherein the photoinitiator compound (b-1) is represented by the following formula (III):

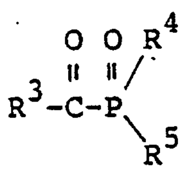

(III)

wherein $R^3$, $R^4$ and $R^5$ mean independently an alkyl or oxyalkyl group having 1-8 carbon atoms or a phenyl, substituted phenyl, benzyl or substituted benzyl group.

22. The process as claimed in Claim 21, wherein in the photoinitiator compound of the formula (III), $R^3$, $R^4$ and $R^5$ are independently a hydroxyalkyl group having 1-8 carbon atoms or a phenyl or substituted phenyl group.

23. The process as claimed in Claim 22, wherein the photoinitiator compound (b-1) is trimethylbenzoyldipheylphosphine oxide or benzoyldiethoxyphosphine oxide.

24. The process as claimed in Claim 13, wherein the photoinitiator (B) is a mixture of (b-1) the photoinitiator compound and (b-2) another photoinitiator compound, and the peak of sensitive wavelengths of said other photoinitiator compound (b-2) is between 200-365 nm, the latter wavelength being exclusive.

25. The process as claimed in Claim 24, wherein the photoinitiator compounds (b-1) and (b-2) are mixed at a ratio satisfying the following relationship:

(b-1) ≥ (b-2)